**Europäisches Patentamt**

**European Patent Office**

**Office européen des brevets**

(19)

(11) Publication number : **0 426 339 B1**

## (12) EUROPEAN PATENT SPECIFICATION

(45) Date of publication of patent specification :
09.06.93 Bulletin 93/23

(51) Int. Cl.⁵ : **B60G 17/01, F16F 9/46**

(21) Application number : **90311497.3**

(22) Date of filing : **19.10.90**

(54) Vehicle suspension apparatus.

(30) Priority : **02.11.89 US 430858**

(43) Date of publication of application :
**08.05.91 Bulletin 91/19**

(45) Publication of the grant of the patent :
**09.06.93 Bulletin 93/23**

(84) Designated Contracting States :
**DE ES FR GB**

(56) References cited :
**EP-A- 0 236 947**
**EP-A- 0 321 078**
**RESEARCH DISCLOSURE April 1989, RD30070**
**"Reduced Order Active Suspension Control"**
**M.A.Salman et al.**

(73) Proprietor : **GENERAL MOTORS CORPORATION**
**General Motors Building 3044 West Grand Boulevard**
**Detroit Michigan 48202 (US)**

(72) Inventor : **Majeed, Kamal Naif**
**520 Park Ridge Drive**
**Centerville, Ohio 45459 (US)**

(74) Representative : **Denton, Michael John et al**
**Patent Section 1st Floor Gideon House 28 Chapel Street**
**Luton Bedfordshire LU1 2SE (GB)**

Jouve, 18, rue Saint-Denis, 75001 PARIS

## Description

This invention relates to a suspension controller for use with, for example, a wheeled vehicle having a body carried on unsprung, road contacting wheels, by suspension springs located at a plurality of suspension points on the vehicle.

In recent years, with the development of computers sufficiently small and powerful for use in automotive suspension control, there has been a great number of papers, patents and other publications describing computer controlled suspensions attempting to circumvent the design compromises inherent in traditional passive suspension controls. Some of the simpler systems have been seen in vehicles available to the public or demonstrated in a public environment. For example, one may currently buy a number of vehicles having suspensions employing damping shocks or struts with a plurality of selectable damping orifices and a stepper motor or similar device responsive either to an operator controlled switch or one or more sensed vehicle suspension related variables to select a damping mode according to predetermined criteria and thus provide vehicle ride and handling tuned for a particular type of road surface or vehicle performance mode. Such systems are slow in response. Even systems which automatically respond to road inputs tend to respond to the average road surface rather than to individual road inputs in real time.

The paper "Dual Processor Automotive controller" by Kamal N Majeed published in the proceedings of the IEEE/Applications of Automotive Electronics, Michigan, 19 October 1988, describes a prior art system.

At the same time, the literature shows academic studies and theoretical descriptions of proposed suspension controllers supposedly fast enough, assuming the required hardware is available, to operate in real time and thus to respond to each individual road disturbance in time to control the response of the vehicle thereto. Generally, this literature deals with simplified quarter car (single wheel) models and does not explain how optimally to integrate such a control for, for example, a four-wheeled vehicle, in order to control both body and wheel motions in real time.

A known method of modern control systems is linear full state control, in which control is based on a supposed knowledge of all independent state variables of a machine. Such a control may be described in practical terms as a matrix operation in which a matrix of gains provides an independent linear contribution from each state variable to each controlled variable. Even the simplest complete vehicle models, however, require a minimum of 14 state variables; and many of these are difficult or impossible to measure in real time for reasonable cost with presently available technology. Therefore, such controls must use complex mathematical algorithms such as Kalman filters or Luenberger observers to predict the unmeasured state variables from those which can be measured; and these algorithms introduce phase lags and errors which can considerably degrade control accuracy while requiring prodigious computer time and hardware.

US patent 4,696,489 discloses a known method of controlling vehicle suspension systems.

It would be desirable to determine if there is some combination of state variables, short of the complete set, which are easily measured or derived simply and quickly from other vehicle operating variables and will provide satisfactory vehicle ride and handling without the need for the use of complex filters and observers - a system that will provide most of the benefit of the full state control at a much lower cost.

In addition, it is desirable, when attempting to design a vehicle real time suspension control, to determine how to coordinate the conflicting demands of comfortable ride, good body attitude control during vehicle maneuvers and good wheel control to retain traction on rough road surfaces, especially when dealing with several modes of body movement and vertical movement of separate wheels at four different suspension points.

The present invention seeks to provide improved vehicle suspension apparatus.

According to an aspect of the present invention, there is provided vehicle suspension apparatus according to claim 1.

The suspension uses less than the full number of state variables without attempting to predict or approximate those not used. Rather, it uses state variables carefully chosen to provide the optimal combination of inputs for control over a wide range of vehicle performance modes.

In addition, the state variables may be combined in a local/global manner that facilitates control of both body and wheel movements and further allows quick and easy software-controlled change, in real time, between different suspension behaviors which emphasize different aspects of suspension performance.

The state variables may be obtained from sensors currently available; and the control may be implemented with current microprocessor technology at reasonable cost. The suspension can be sufficiently robust to be manufacturable in high volume.

In an alternative embodiment the body state variables may be a plurality of vertical body corner velocities.

The actuators may be fully active hydraulic or electric power generating actuators; or they may be variable dampers, which provide dissipative power only. The actuators are preferably capable of operation at a frequency at least twice the resonant wheel vibration frequency. Such suspension is particularly suited for the latter, since it relies mainly on state velocity variables.

The gains for body and wheel contributions to the force at each suspension point can thus be separated for easy tuning and gain switching for real time control of body vs. wheel emphasis in suspension performance. The suspension control thus can provide real time control of body and wheel motion.

The suspension actuator may be a hydraulic or electric actuator capable of providing power to the suspension, as used in a fully active suspension controller. Alternatively, it may be a variable damper, capable only of dissipating power, as used in a semi-active suspension controller, in which case it may provide damping control either in a continuous or a discrete manner.

An embodiment of the present invention is described below, by way of illustration only, with reference to the accompanying drawings, in which:

Figure 1 is a schematic diagram of a motor vehicle fitted with an embodiment of suspension apparatus;

Figure 2 is a cross-sectional view of a variable damper for use as a suspension actuator in the suspension apparatus of Figure 1;

Figure 3 is a typical set of force/velocity curves for the variable damper of Figure 2;

Figure 4 is a block diagram of a controller for use in the suspension apparatus of Figure 1;

Figure 5 shows a mathematical model of the vehicle of Figure 1; and

Figures 6-10 are flow charts illustrating the operation of the suspension apparatus of Figure 1.

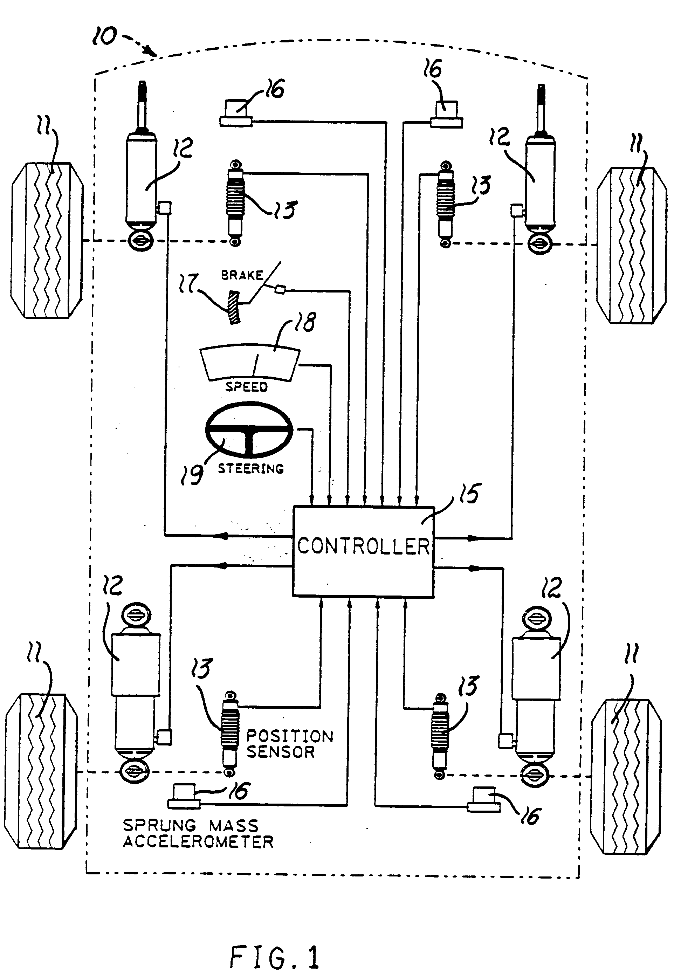

Figure 1 shows a schematic diagram of a motor vehicle with an embodiment of suspension apparatus. The vehicle comprises a body 10 which can be thought of as a sprung mass, and four wheels 11 which, together with some of the vehicle suspension units, form an unsprung part of the vehicle. The body 10 is generally rectangular in shape and supported at each corner, or suspension point, on a wheel 11 by means of suspension apparatus 12. The suspension apparatus comprises for each suspension point a weight-bearing suspension spring connected in parallel with a suspension actuator. Each actuator is disposed to exert a controllable force on the body 10 and wheel 11 at its respective suspension point, in parallel with the spring.

The apparatus 12 is shown simply as a damper, although it is to be understood that a spring, such as a standard coil suspension spring, is connected in parallel with it.

The suspension apparatus 12 further includes an axle for rotatably supporting wheel 11 and such other suspension components, for example control arms, as are commonly used in suspension systems. These components are not described in detail here.

At each suspension point, a suspension position sensor 13 is connected between the body and the wheels to measure the relative vertical position between them, and is adapted to generate an output signal indicative of this measure for input to a controller 15. A position sensor suitable for such a purpose is the sensor known as the LVDT sensor available from, among others, Nartron Corporation of Reed City, Michigan.

The signal output by each sensor 13 may be differentiated to produce a body/wheel vertical velocity signal.

An accelerometer 16 is also positioned at each suspension point of body 10 to generate a vertical acceleration signal for its respective suspension point, and is, in this case, an absolute acceleration signal. This is input into the controller 15. An accelerometer suitable for use in this system is made by First Inertia Corporation of Hampshire, England. This accelerometer is of the type which gives an absolute measure of acceleration and, as with such accelerometers, should be mounted with care so as to minimize cross-axis sensitivity which might contaminate the vertical acceleration signal with horizontal acceleration information. Integration of the absolute vertical acceleration signal by the controller 15 provides a vertical body corner velocity signal for each suspension point. From the difference of these signals, the controller 15 is able to compute the vertical wheel velocity.

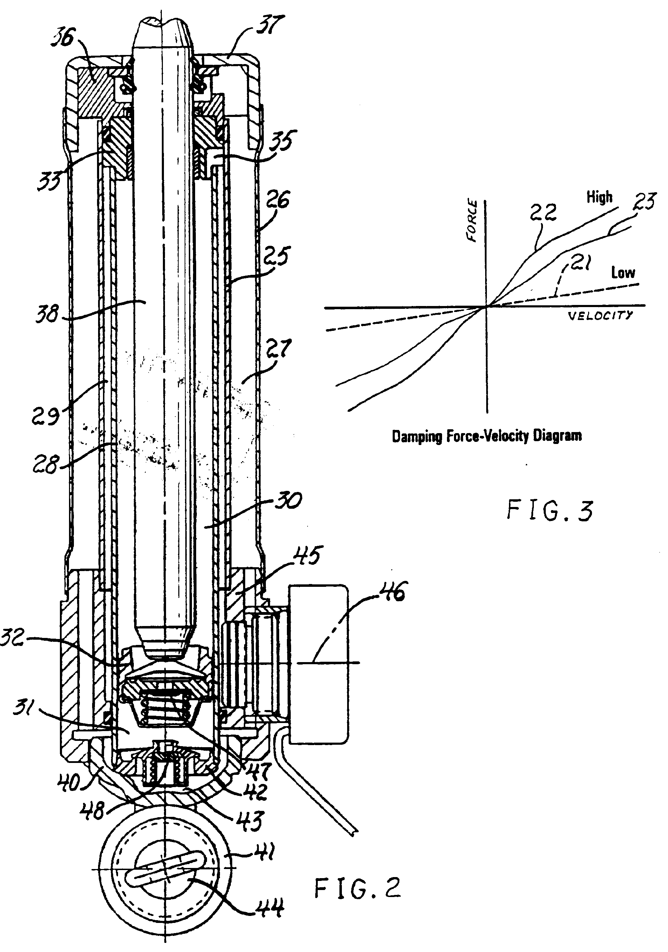

The suspension controller of this embodiment is an on/off semi-active controller using a discrete variable damping actuator of the type shown as damper 20, shown in more detail in Figure 2, and having a dual force/velocity curve of the type shown in Figure 3. Damper 20 is a standard vehicle shock or strut modified by the addition of a bypass passage adapted to be opened or closed by a bypass valve which is capable of high frequency operation for real time, on/off damping control. With the bypass valve open, the damper has a low damping force curve such as curve 21 in Figure 3; while with the bypass valve closed, the damper has a high damping force curve, such as curve 22 of Figure 3.

As can be seen in Figure 2, the variable damper 20 comprises inner and outer reservoir tubes 25 and 26, respectively, defining therebetween a reservoir 27. A central pressure cylinder 28 is located axially within inner reservoir tube 25 and defines with it an annular passage 29. The space within central pressure cylinder 28 is divided into upper and lower chambers 30 and 31, respectively, sealed from one another by an axially slideable piston 32. Upper chamber 30 and annular passage 29 are closed at their upper ends by a pressure closure member 33 which provides relatively unrestricted communication between chamber 30 and passage 29 through an opening 35. Reservoir 27 is closed at its upper end by a reservoir closure member 36 and an upper end cap 37.

Piston 32 is attached to the lower end of a reciprocating piston rod 38, which extends upward through openings in members 33, 36 and end cap 37 for attachment to a suspension point in the manner normal for shocks or struts. High pressure and lag seals are provided in members 33 and 36, respectively; and a lower pressure seal is provided in end cap 37 around piston rod 38. Since there will be some fluid leakage past the high pressure and lag seals, a return passage 39 is provided through reservoir closure member 36 to reservoir 27.

The lower end of damper 20 comprises an outer closure cap 40 rigidly attached to reservoir tubes 25 and 26 and pressure cylinder 28 and connected in the normal manner to a member of the unsprung part of the vehicle, more specifically to control arm 44, to which a wheel 11 is attached, by means of a standard fitting 41. An inner closure cap 42 closes the bottom of lower chamber 31 and defines a lower reservoir chamber 43 between closure caps 40 and 42 which is connected to reservoir 27.

A lower closure member 45 closes the lower end of reservoir 27 and annular passage 29 and further provides mounting for an electrically activated bypass valve apparatus 46 which, in response to a signal from controller 15, controls communication between the annular passage 29 and the reservoir 27 by way of lower reservoir chamber 43. Since damper 20 is to respond to the controller in real time to control wheel as well as body movements, valve 46 must be capable of moving between its closed and open positions at a frequency significantly greater than the resonant wheel (unsprung mass) vibration frequency, preferably at at least twice the vibration frequency and preferably higher. For example, a typical resonant wheel vibration frequency is 12 Hz. Thus, the valve of damper 20 should respond at least up to 24 Hz and preferably up to 50 Hz. A valve suitable for use as valve 46 is a solenoid cartridge valve such as the Waterman Hydraulics (R) Series 12, a normally closed valve with a 19 litre per minute capability.

Piston 32 contains standard shock piston valve and orifice apparatus 47 including one or more throttling orifices, a rebound blowoff valve and a compression check valve. Inner closure cap 42 contains standard shock base valve apparatus 48 including one or more throttling orifices, a compression blowoff valve and a rebound check valve. These valves and orifices provide compression and rebound damping force characteristics of the type well known in the art, and, specifically, adapted to produce the high damping force curve 22 of Figure 3 when the bypass valve apparatus 46 is closed so as to prevent direct communication between the annular passage 29 and the reservoir 27.

Typically, in extension or rebound, upward movement of piston 32 causes throttled flow through the orifices and, at high velocity, movement of the blowoff valve of piston 32. This flow is equal to the decrease in the annular volume of upper chamber 30; and a flow of fluid to compensate for the volume of displaced piston rod 38 is drawn into lower chamber 31 from reservoir 27 in a relatively unrestricted manner through the check valve of base valve apparatus 48. Thus, fluid will flow into the lower chamber 31 from both the upper chamber 30 and the reservoir 27.

Likewise, in compression, downward movement of piston 32 drives fluid out of lower chamber 31 in a relatively unrestricted manner through the check valve of piston valve and orifice apparatus 47. The fluid flow comprises a component equal to the increase in the annular volume of upper chamber 30 through the orifice apparatus 47, plus a component equal to the volume of displaced piston rod 38 through the base valve apparatus 48. At high velocity, the blowoff valve of the base valve apparatus 48 is pushed away from the valve seat against the action of its associated spring to increase the fluid flow rate.

With bypass valve apparatus 46 open to allow direct communication between annular passage 29 and reservoir 27, the apparatus will produce the low damping force curve 21 of Figure 3. In extension, the displaced fluid from upper chamber 30 finds a comparatively unrestricted flow path through the open valve of apparatus 46 into reservoir 27; and the full increase in volume of lower chamber 31 flows relatively unrestricted from reservoir 27 through the check valve of base valve assembly 48 into lower chamber 31. In compression, a fluid flow equal to the full decrease in volume of lower chamber 31 finds relatively unrestricted passage through the check valve of piston valve and orifice assembly 47; and a flow equal to the displaced rod 38 volume finds relatively unrestricted passage from upper chamber 30 through the open valve of apparatus 46 into reservoir 27.

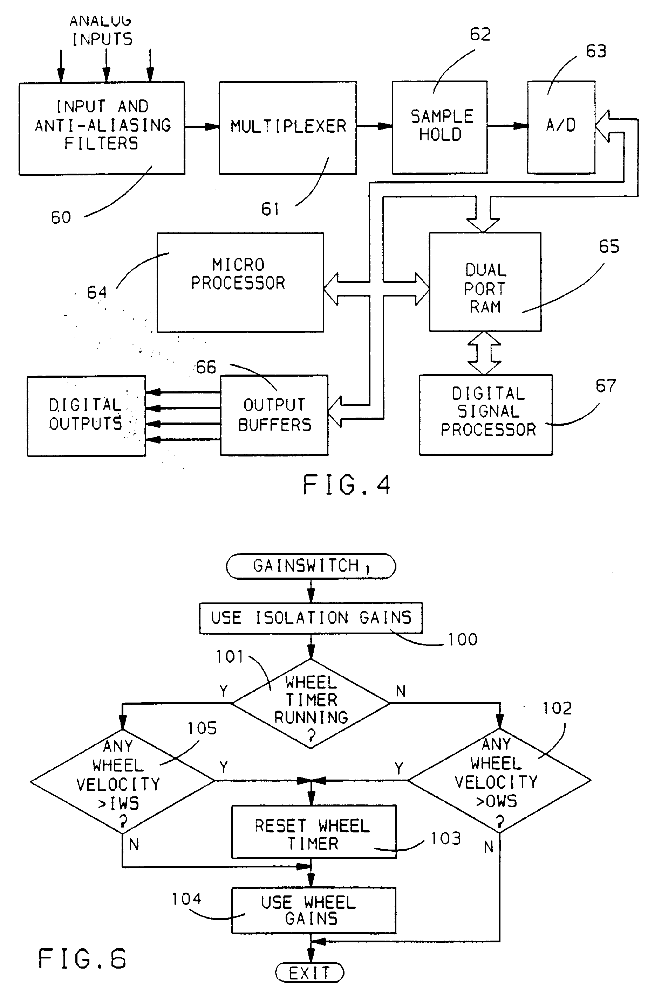

The hardware configuration of controller 15 is shown in schematic and block diagram form in Figure 4. The analog inputs from sensors 13, 16, and 17 to 19 are processed in input apparatus 60, which includes sensor interface circuitry, anti-aliasing filters and any additional analog signal processing circuitry, such as circuitry for differentiating the relative position signals from sensors 13 to form relative velocity signals. The integration of the body corner acceleration signals from sensors 16 may also be performed by this circuitry but is preferably performed in software within the digital circuitry to be described.

With regard to the input signals, it should be noted that the controller has been found to work well, at least in the case of an on/off damping actuator, with a loop frequency of 1 KHz, which means that, to avoid aliasing distortion, the input signals should be filtered through a low-pass filter to avoid any significant input signals at frequencies above 500 Hz.

The differentiator, especially, should be designed with care, since differentiation, by nature, accentuates the high frequencies in the signal and heavy filtering tends to introduce phase delays which can slow system response.

The processed and filtered input signals are read into the system by a multiplexer 61, which feeds each signal in turn to a sample-and-hold circuit 62 and to an analog-to-digital (A/D) converter 63. The signals can be pipelined through this portion of the apparatus to speed data read-in.

The output of the A/D converter 63 is fed to an eight-bit data bus which is connected to a microprocessor 64, RAM 65 and output buffers 66. A separate 16 bit-data bus connects dual port RAM 65 to a digital signal processor 67.

Microprocessor 64, which may, for example, be one of the 68HC11 family made by the Motorola (R) Corporation, contains the basic system operating software and controls the data handling and decision making tasks of the controller. The signal processor 67, which may be a TMS320C15 or TMS320C17 processor made by Texas Instruments (R) Corporation, is optimized for mathematical computations such as multiplication, which would greatly slow down a general purpose microprocessor 64. Such multiplications are used both in the solution of the control equations and in a digital integration routine.

Output buffers 66 interface the signal processor with the four actuators 12 and may further include digital low pass filtering to prevent output of signals at frequencies higher than those to which the actuators 12 are adapted to respond. For the embodiment shown, output buffers 66 need only be digital buffers, since the output control signals to the actuators are single-bit digital signals selecting high or low damping. In a continuous active or semi-active system, however, suitable digital-to-analog converters would be inserted before the output buffers 66.

A more complete description of the apparatus can be found in the paper "Dual Processor Automotive Controller" by Kamal N. Majeed, published in the proceedings of the IEEE/Applications of Automotive Electronics, Dearborn, Michigan, Oct. 19, 1988. However, cost savings may be achieved in a mass produced system by the replacement of the dual port RAM 65 with ordinary RAM and the use of a software controlled interface bus between the microprocessor and the signal processor 67 and a three line serial interface for input and output.

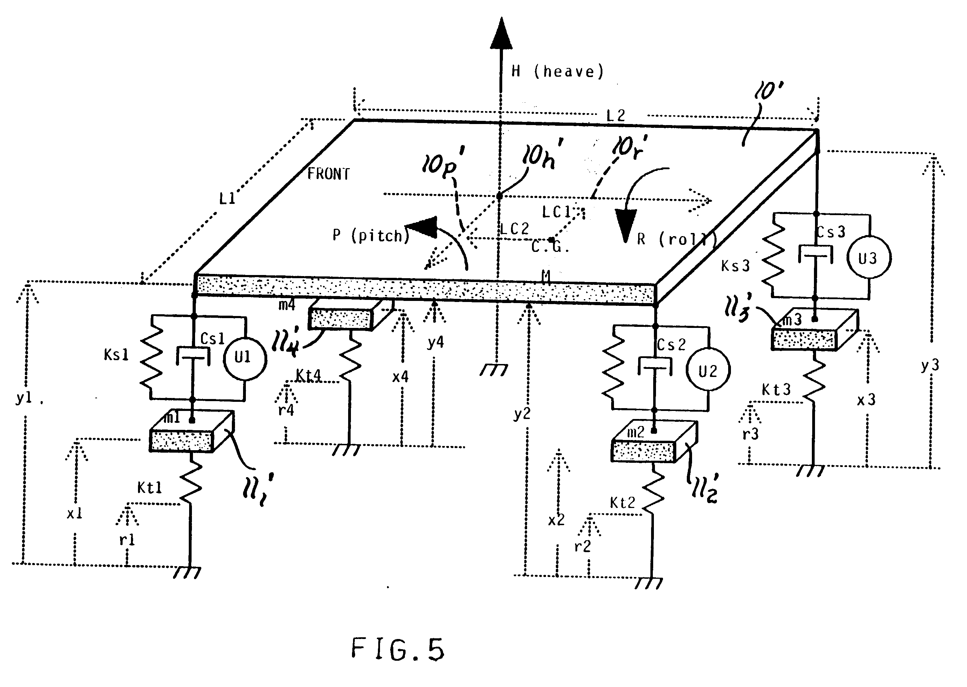

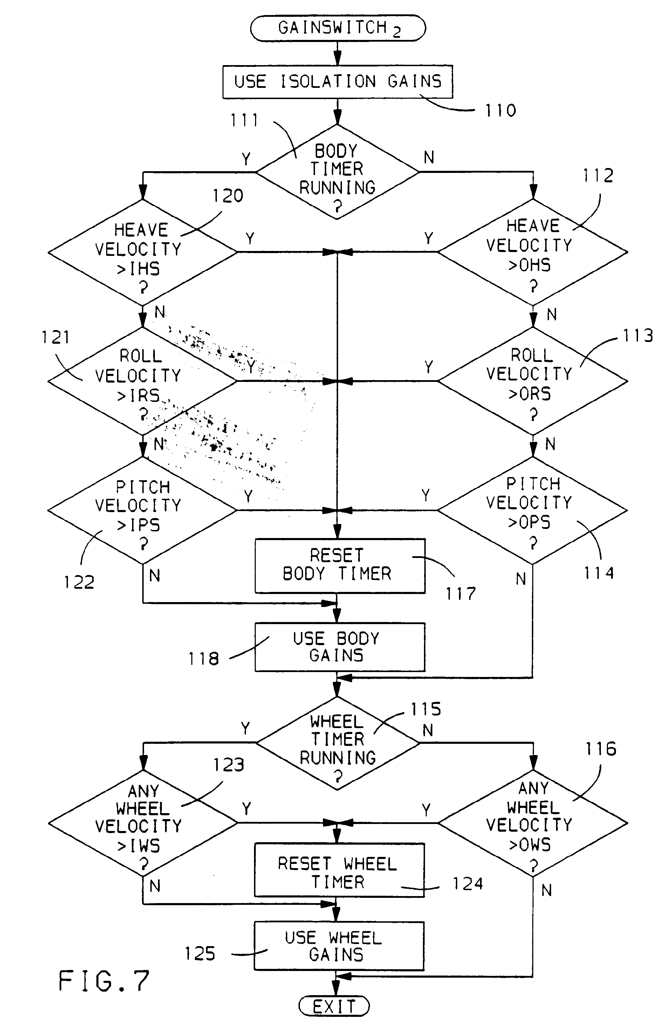

The control implemented by controller 15 may be better understood with reference to the model shown in Figure 5 and the flow charts of Figures 6-10. Referring to Figure 5, a vehicle body or sprung mass 10' with a mass M is an idealized model of the vehicle body 10 shown in Figure 1. Movement of body 10' is defined with respect to a point 10h' and axes 10p' and 10r'. Vertical movement of point 10h' is represented as heave H. Rotational movement of body 10' about axis 10r', which passes through point 10h' and is aligned front to rear with respect to body 10' is represented as roll R. Rotational movement of body 10' about axis 10p', which passes through point 10h' and is aligned right side to left side with respect to body 10', perpendicular to axis 10r', is represented as pitch P.

At each corner of body 10', a substantially unsprung mass $11_i'$ (i=1,2,3,4), which is an idealized model of wheel 11 of Figure 1 (in combination with the other elements contributing to the unsprung mass) has a mass $m_i$. Each unsprung mass $11_i'$ rests on the ground and has a spring constant $k_{ti}$, representing the tyre spring force. It is also connected to its respective suspension point on the body 10' with a spring constant $k_{si}$ representing the suspension spring force, a damping constant $c_{si}$ representing the suspension damper, and an external actuator force $U_i$ representing the force applied by the suspension apparatus 12.

The position of each unsprung mass $11_i'$ with respect to an inertial reference frame is represented as $x_i$, while the position of the respective suspension point of body 10' with respect to the same reference frame is represented as $y_i$. Figure 5 also shows the position $r_i$ of the road at each unsprung mass $11_i'$ with repsect to the same inertial reference frame.

The effective length $L_2$ of body 10 is the distance parallel to axis 10r' between supporting points of front and rear unsprung masses on the same side of body 10. Similarly, the effective width $L_1$ of body 10 is the distance parallel to axis 10p' between supporting points of corresponding left and right unsprung masses.

A vehicle model chosen to have seven degrees of freedom requires 14 states, which are chosen here as six body states, including the heave, roll and pitch positions and velocities $(H,R,P,\dot{H},\dot{R},\dot{P})$ and, for each suspension point, wheel position and velocity $(x_i,\dot{x}_i)$. The controller, however, does not use all 14 states. Rather, it uses mainly the velocities as feedback variables and, in the semi-active case, only the velocities.

On the basis of this, the force on each wheel (i=1,2,3,4), in the case of a fully active suspension, can be given as:

$$F_i = G_{di}D_i + G_{wi}\dot{x}_i + G_{hi}\dot{H} + G_{ri}\dot{R} + G_{pi}\dot{P} \quad (1)$$

where $D_i$ is the suspension displacement $(y_i-x_i)$, $\dot{x}_i$ is the wheel velocity, $\dot{H}$ is the heave velocity, $\dot{R}$ is the roll velocity, $\dot{P}$ is the pitch velocity and $G_{di}$, $G_{wi}$, $G_{hi}$, $G_{ri}$ and $G_{pi}$ are the gains for the contribution of the respective state variables to the force $F_i$.

For semi-active suspension control, with actuators that provide only a damping force, the first term of equation (1) may be eliminated, since it corresponds to a dominant part of the active power required. The force on each wheel in the case of semi-active control can be given as:

$$F_i = G_{wi}\dot{x}_i + G_{hi}\dot{H} + G_{ri}\dot{R} + G_{pi}\dot{P} \quad (2)$$

The controller thus combines a local state variable indicative of wheel velocity with centralized state variables indicative of body velocities in the most relevant three modes of heave, roll and pitch and, only in the case of fully active suspension control, a state variable indicative of suspension displacement, which helps control the resonant vibration frequencies of the suspension apparatus (especially to allow lowering the body mode frequency from 1 Hz to about 0.3 Hz). With such control, the desired force between the body and each wheel is substantially independent of the velocities of the other wheels, and provides local control of wheel hop or vibration. In addition, the contributions of body velocities are separated into heave, roll and pitch modes to assist precise tuning of the suspension for body as well as wheel movement.

Another version of the control equation for a semi-active suspension may be expressed in the following equation:

$$F_i = G_{wi}\dot{x}_i + \text{sum}[G_{yi}\dot{y}_i] \quad (3)$$

where the first term is identical to the wheel velocity term in equation (2) but the heave, roll and pitch velocity terms have been replaced by a linear combination of body corner velocities $\dot{y}_i$, using gains $G_{yi}$.

For an absolutely rigid vehicle body, three of the four body corner velocities would be sufficient to provide an equivalent for roll, pitch and heave velocities. However, since no vehicle body is absolutely rigid, more accuracy will be obtained by using all four body corner velocities. In addition, it would be possible to use only two diagonal body corner velocities in a control system with an additional reduction in accuracy.

It will be seen at a later point in this description that the heave, roll and pitch velocities may be mathematically computed from the body corner velocities; however, use of equations 1, 2, 3 eliminates the need for such mathematical computation thereby saving computer computational time and hardware.

For the semi-active controller, the use of velocity feedback only results in the demand power being mostly dissipative (90 percent of the time), due to the phasor relationships involved. The controller is thus naturally well suited to semi-active suspension control such as that of this embodiment.

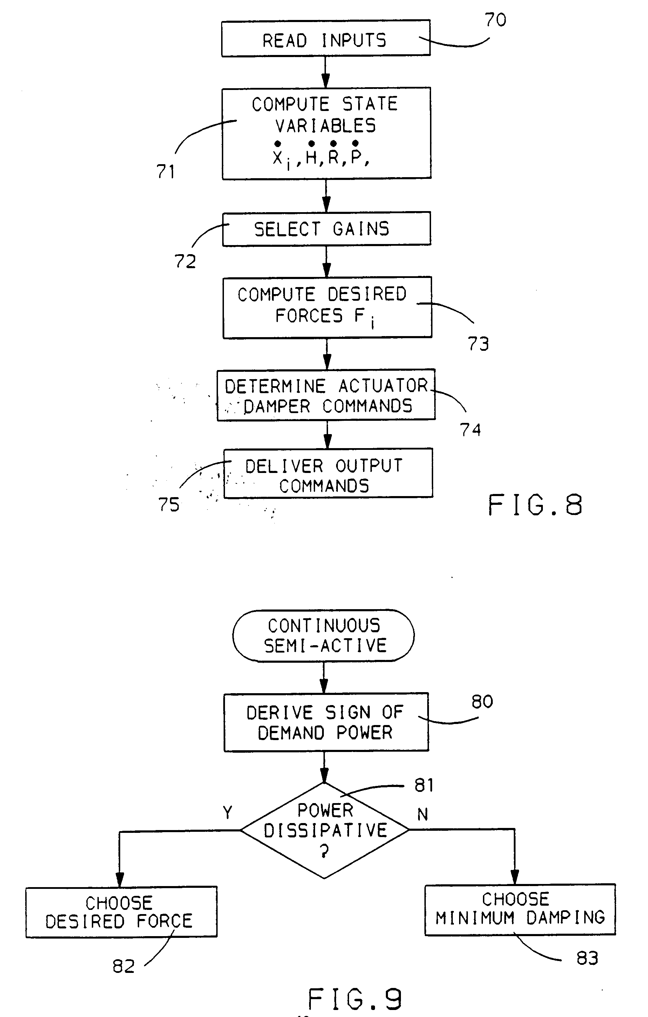

Referring to Figure 8, the main control sequence provides for the reading of inputs (70), followed by the derivation of state variables (71). The state variables $\dot{x}_i$, $\dot{H}$, $\dot{R}$ and $\dot{P}$ are then derived from the sensed inputs as follows:

The input signal from acceleration sensor 16 at a particular suspension point of the vehicle is integrated to provide the vertical body corner velocity $\dot{y}_i$. The input signal from the relative suspension displacement sensor 13 at the suspension point is differentiated to provide the relative body/wheel vertical velocity $\dot{y}_i-\dot{x}_i$. The difference between the vertical body corner velocity $\dot{y}_i$ and the relative body/wheel velocity $\dot{y}_i-\dot{x}_i$ yields the vertical wheel velocity $\dot{x}_i$ at that suspension point.

It should be noted that both the vertical body corner velocity $\dot{y}_i$ and the vertical wheel velocity $\dot{x}_i$ are absolute velocities, referenced to an intertial reference frame and not to the road.

The heave, roll and pitch velocities $\dot{H}$, $\dot{R}$ and $\dot{P}$ are derived from the vertical body corner velocities $\dot{y}_i$ at the four suspension points according to the following equations, wherein all variables are velocities:

$$\dot{H} = (1/4)\dot{y}_1 + (1/4)\dot{y}_2 + (1/4)\dot{y}_3 + (i/4)\dot{y}_4 \quad (4)$$
$$\dot{R} = -(1/2)L_1\dot{y}_1 - (1/2)L_1\dot{y}_2 + (1/2)L_1\dot{y}_3 + (1/2)L_1\dot{y}_4 \quad (5)$$
$$\dot{P} = -(1/2)L_2\dot{y}_1 + (1/2)L_2\dot{y}_2 + (1/2)L_2\dot{y}_3 - (1/2)L_2\dot{y}_4 \quad (6)$$

Continuing with the flow chart of Figure 8, the loop next selects system gains. Since no vehicle suspension can simultaneously maximize all aspects of vehicle ride and handling, the gains $G_{wi}$, $G_{hi}$, $G_{ri}$ and $G_{pi}$ are ordinarily computed during system development for a particular desired suspension behavior. For example, one set of gains for a particular vehicle may emphasize wheel control for maximum tyre traction on rough road surfaces; whereas a different set of gains may emphasize body movement and attitude control during vehicle cornering or braking. Yet another possibility is a set of gains which produces a very soft, comfortable ride when the road surface is comparatively smooth, with only small amplitude, high frequency road input to the suspension.

A simple example of such gain switching is shown in the flow chart of Figure 6. In this example, two sets of gains are stored permanently in system memory: (1) a set of isolation gains known to produce a soft ride for maximum comfort; and (2) a set of wheel gains known to produce maximum wheel hop control for traction on washboard and other rough road surfaces which excite the wheel at its resonant vibration frequency.

The flow chart of Figure 6 shows GAINSWITCH1 (elements 100-105), which is a portion of the control program that determines which set of gains will be used in the calculation of desired wheel forces. GAINSWITCH1 chooses isolation gains except when a wheel velocity becomes sufficiently large to indicate the need for wheel gains to control wheel motion. More specifically, GAINSWITCH1 starts by assuming a default set of isolation gains (100). If the wheel timer is not running (101) and the velocities $\dot{x}_i$ of all wheels are within an outer wheel switchband OWS (102), the default isolation gains are retained as the chosen gains. If the wheel timer is not running (101) but the velocity of any wheel is outside the outer wheel switchband OWS (102), the wheel timer is reset (103) and the set of wheel gains is chosen (104) in place of the isolation gains.

GAINSWITCH1 uses a wheel timer to command use of the chosen wheel gains for a predetermined minimum time and to indicate, during each successive cycle of the control program, whether such wheel gains have been in use. The necessary timing can be produced by decrementing a counter, which may be a register such as a RAM memory location which has been loaded with a number, such as 4, to provide the required interval.

The system provides hysteresis, so that, once a wheel velocity goes outside the outer wheel switchband OWS, all wheel velocities must fall within an inner wheel switchband IWS before the controller switches back to the isolation gains. In addition, there is a time delay before the controller switches back to the isolation gains even after all wheel velocities change to fall within the inner wheel switchband IWS. Thus, if the wheel timer is running (101) and any wheel velocity is outside the inner wheel switchband (105), the wheel timer is reset (103) and the wheel gains are chosen. If the wheel timer is running (101) but all wheel velocities are within the inner wheel switchband (105), the wheel gains are chosen (104) but the timer is not reset and is thus allowed to be decremented. Therefore, when all wheel velocities go within the inner wheel switchband IWS, the wheel gains will still be used for the wheel timer period before the controller switches back to the isolation gains.

Another embodiment, having a more sophisticated procedure, is shown in Figure 7, in which a set of body gains is added to provide maximum body attitude control when large body velocities are detected. Flowchart GAINSWITCH2 (elements 110-125) of Figure 7 starts by assuming a default set of isolation gains (110). The control then determines if a body timer, of the type used in step (101) of Figure 6, is running (111), to check if the set of body gains is already in use. If the body timer is not running, the heave, roll and pitch velocities are compared to outer heave (112), roll (113), and pitch (114) switchband values, respectively. If they are all within these outer switchbands, the control then determines if the wheel timer is running (115). If not, the control determines if a wheel velocity is outside an outer wheel switchband (116), as in the example of Figure 6. If all wheel velocities are within the outer wheel switchband, this portion of the loop is exited with the isolation gains chosen.

If any of the heave, roll or pitch velocities are outside their respective outer switchband values (112, 113, 114), the body timer is reset (117) and the body gains are chosen (118). Then, if the wheel timer is not running (115) and the wheel velocity is within its outer switchband value (116), this portion of the control loop is exited with the body set of gains chosen. If the body timer is running (111) and one or more of the heave, roll or pitch velocities are outside their respective inner heave, roll or pitch switchbands, the body timer is reset (117) and the body gains chosen (118). If the body timer is running (111) but none of the heave, roll or pitch velocities is outside its respective inner switchband (120, 121, 122), the body gains are chosen (118) without resetting the body timer.

However, regardless of whether body or isolation gains are chosen as described above, if the wheel timer is running (115) or any wheel velocity is outside the outer wheel switchband OWS (116), the wheel gains will be chosen over body or isolation gains in a manner similar to that described in the example of Figure 6. If the wheel timer is not running (115) but a wheel velocity is outside the outer wheel switchband OWS (116), or if the wheel timer is running (115) and any wheel velocity exceeds the inner wheel switchband IWS (123), the wheel timer is reset (124) and wheel gains are chosen (125). If the wheel timer is running (115) but no wheel velocity exceeds the inner wheel switchband IWS (123), wheel gains are chosen without reset of the wheel timer, which allows the wheel timer to be decremented.

In the example of Figure 7, the body and wheel timers are operated independently of each other but in a similar manner to one another. Wheel gains, when chosen, always take the highest priority; and body gains, chosen in the absence of wheel gains, take priority over isolation gains.

Referring again to Figure 8, once the gains are chosen (71) and the state variables are computed from the input sensor signals (72), the desired force $F_l$ at each suspension point of the vehicle may be computed by use of the control equations previously described (73). Next, the program determines the actuator commands from the desired forces $F_l$ (74) and outputs the actuator commands to the actuators. In the case of a fully active suspension, wherein an actuator is capable of providing power to the suspension, the actuator command may cause the desired force itself to be applied to the wheel at the respective suspension point.

However, a damping control can apply only a damping or energy dissipating force; and the system must therefore specify what to do if the desired force is active: that is, it demands power input to the suspension apparatus which a damper cannot provide.

The process for a continuous semi-active (damping only) control is shown in the flow chart of Figure 9. To determine whether the desired force will be applied in a dissipative or active manner, the control checks the sign of the demand power, as determined by the sign of the product of the desired force $F_d$ and the body/wheel relative velocity $\dot{y}_l - \dot{x}_l$. It is not necessary to perform any numerical multiplication: the control need only compare the signs (80, 81). If the signs are the same, the power demanded be dissipative and may be applied by a damper. Thus, the desired force is chosen (82) and the actuator command generated accordingly. If the signs are opposite to one another, however, the power is active and cannot be supplied by a damper. Therefore, for a continuously variable damping actuator, the control outputs to the actuator an actuator command specifying the minimum damping force (83). The minimum damping force will probably not be zero, since the actuator will provide some restriction to fluid flow even with its damping selection valve 46 fully open.

The minimum damping force may even be set to a higher non-zero value for other reasons, such as system stability or smoothness of operation. This method is described by Dean Karnopp in "Active Damping in Road Vehicle Suspension Systems", Vehicle System Dynamics, 12 (1983), pp. 291-316, as well as in his earlier U.S. Patent No. 3,807,678 to Karnopp et al, issued Apr. 30, 1974.

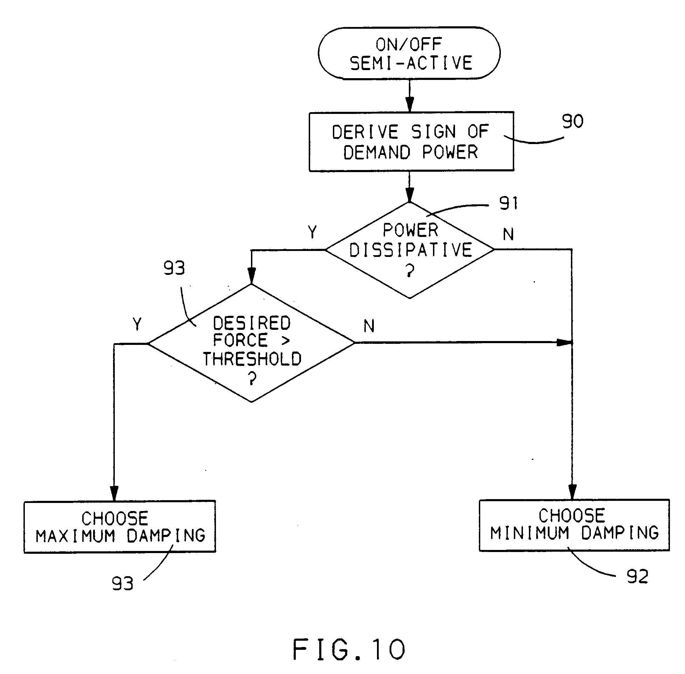

An on/off damping control uses an actuator such as actuator 20 that has a damping control valve 42 with two positions: a first creating a minimum damping force, and a second creating a maximum damping force. In such a system, active energy calls for the minimum damping force, as in the continuous damping force system. However, for a dissipative force, either the minimum or maximum damping force may be selected, depending on which is closest to the desired damping force $F_l$. For this purpose, a threshold curve may be defined between the minimum and maximum force curves; and the desired force $F_l$ is compared to this intermediate force. If it is greater (in absolute value) than the threshold, the maximum force is chosen; if not, the minimum force curve is chosen. Thus, as shown in the flow chart of Figure 10, the determination of output force for such a system begins, as in the continuous damping case of Figure 9, by first deriving the sign of demand power (90) and then determining from this sign whether the demand power is dissipative or active (91). If active, the minimum damping force is selected (92); but, if dissipative, the desired force is compared (93) with a threshold stored in memory.

This threshold, represented by curve 23 in Figure 3, may be stored as a series of points (nine, for example) in memory. For a given desired force and body/wheel relative velocity $\dot{y}_l$-$\dot{x}_i$, the actual threshold value is computed by interpolation between the closest two of the stored points. If the desired force exceeds the threshold, maximum damping is selected for the actuator command; however, if it does not exceed the threshold, minimum damping is selected.

Thus, the damping force used when the power is dissipative is not confined to the maximum damping force but is chosen to be the most appropriate of the maximum and minimum damping forces, depending on the desired force. This tends to reduce harshness of ride, especially on comparatively good roads, where suspension forces and accelerations are comparatively small and may for most of the time produce a desired suspension force lower than the threshold. In addition, the threshold allows an extra degree of freedom in suspension tuning, since it allows adjustment of the average damping by changing the threshold in software without changing the maximum damping level, which is determined by the orifices and valves of the damper.

With regard to the examples of Figures 6 and 7, of course, other detailed embodiments with different priorities may be envisioned within the general form of the gain switching method and apparatus shown. In addition, other sensed or derived wheel or body inputs such as vertical body corner velocities or heave, roll, pitch or vertical corner accelerations may be used as decision making inputs rather than the wheel or body velocities as shown.

Additional signals which may optionally be generated are a vehicle deceleration or braking signal by brake sensor 17, a vehicle speed signal from vehicle speed sensor 18 and a vehicle steering signal from vehicle steering sensor 19. These latter signals are not used in the embodiment of suspension control described above so will not be described in detail. However, many examples of such sensors and their uses for suspension control are known in the art and their application in a suspension control system of the type described above will be apparent to a person skilled in the art.

In practice, it has been found that the system described above provides excellent control of suspension movement without introducing the phase lag and inaccuracy problems of a Kalman filter or Luenberger observer to estimate non-measured states. In addition, the reduced need for processing throughput due to the absence of such filters or observers results in faster processing times and reduced cost in the processor hardware.

The controller can allow a great deal of flexibility in tailoring the "best" suspension behavior for appeal to a particular vehicle operator. However, since the suspension behavior can be entirely software definable, one of the advantages of this system is the ease with which suspension performance may be modified in real time merely by the substitution of one set of gains for another in the control equations.

Attention is drawn to the European publications numbered EP-A-0 426 340 and EP-A-0 426 338 filed the same day as the present application.

## Claims

1. Suspension apparatus for use with a vehicle having a body (10) supported at each of a plurality of suspension points on a support (11), the apparatus comprising sensing means (13,16,64) for deriving a substantially vertical support velocity ($\dot{x}_i$) for each support and a substantially vertical body corner velocity ($\dot{y}_l$) for each suspension point; means (64) for deriving from the vertical support and vertical body corner velocities a set of at least three body state velocity variables ($\dot{P},\dot{R},\dot{H}$) related to vertical body motions and attitude; a plurality of actuators (12) each disposed to exert a substantially vertical force between the body (10) and a respective support (11) at each suspension point; means (64) for deriving a desired suspension force ($F_i$) for each actuator (12) as a linear combination of the vertical support velocity ($\dot{x}_i$) of the respective support and the body state velocity variables ($\dot{P},\dot{R},\dot{H}$); and means (64,66) for applying an output force signal representative of the desired force ($F_i$) for each actuator to the respective actuator.

2. Suspension apparatus according to claim 1, wherein the actuators have a response frequency at least twice the resonant support vibration frequency.

3. Suspension apparatus according to claim 1 or 2, wherein the actuators (12) are adapted to deliver active power to the body (10) and supports (11), and the desired suspension force ($F_i$) for each actuator is derived with respect to the relative body/support position at the respective support.

4. Suspension apparatus according to claim 1, 2 or 3, wherein the body state velocity variables are the heave ($\dot{H}$), roll ($\dot{R}$) and pitch ($\dot{P}$) velocities of the body (10).

5. Suspension apparatus according to any preceding claim, wherein the body state velocity variables relate to velocities of corners or edges of the body (10).

6. Suspension apparatus according to claim 5, wherein the body (10) is substantially rectangular, the suspension points being located adjacent the four corners thereof and the body state variables being related to velocities of the four corners of the body.

7. Suspension apparatus according to any preceding claim, wherein the actuators are dampers (20) having a variable damping force, which force can be varied at a frequency at least twice the resonant support vibration frequency.

8. Suspension apparatus according to claim 7, wherein the dampers (20) include means to provide a first damping mode having a high damping force and a second damping mode having a low damping force, and a valve (46) adapted to switch the dampers (20) between the first and second damping modes at a frequency at least twice the resonant support vibration frequency.

9. Suspension apparatus according to any preceding claim, wherein the supports are substantially unsprung wheels.

**Patentansprüche**

1. Aufhängungsvorrichtung zur Verwendung in einem Fahrzeug mit einer Karosserie (10), die an jedem einer Vielzahl von Aufhängungspunkten von einem Träger (11) getragen ist, mit Erfassungsmitteln (13, 16, 64) zum Ableiten einer im wesentlichen vertikalen Trägergeschwindigkeit ($\dot{x}_i$) für jeden Träger und einer im wesentlichen vertikalen Karosserieeckgeschwindigkeit ($\dot{y}_i$) für jeden Aufhängungspunkt; Einrichtungen (64) zum Ableiten eines Satzes von zumindest drei Karosseriezustands-Geschwindigkeits-Variablen ($\dot{P}$, $\dot{R}$, $\dot{H}$) aus den vertikalen Träger- und vertikalen Karosserieeckgeschwindigkeiten, wobei die Karosseriezustands-Geschwindigkeits-Variablen mit den vertikalen Karosseriebewegungen und der Karosserielage in Beziehung stehen; einer Vielzahl von Betätigern (12), von denen jeder zum Ausüben einer im wesentlichen vertikalen Kraft zwischen der Karosserie (10) und einem entsprechenden Träger (11) an jedem Aufhängungspunkt angeordnet ist; Mittel (64) zum Ableiten einer gewünschten Aufhängungkraft ($F_i$) für jeden Betätiger (12) als Linearkombination der vertikalen Trägergeschwindigkeit ($\dot{x}_i$) der entsprechenden Träger und der Karosseriezustands-Geschwindigkeits-Variablen ($\dot{P}$, $\dot{R}$, $\dot{H}$); und Mittel (64, 66) zum Anlegen eines der gewünschten Kraft ($F_i$) für jeden Betätiger entsprechenden Ausgabekraftsignals an den entsprechenden Betätiger.

2. Aufhängungsvorrichtung nach Anspruch 1, bei der die Betätiger eine Reaktionsfrequenz aufweisen, die zumindest der zweifachen Resonanzträgervibrationsfrequenz entspricht.

3. Aufhängungsvorrichtung nach Anspruch 1 oder 2, bei der die Betätiger (12) zum Abgeben effektiver Leistung an die Karosserie (10) und die Träger (11) geeignet sind und bei der die gewünschte Aufhängungskraft ($F_i$) für jeden Betätiger hinsichtlich der relativen Karosserie/Träger-Position an dem entsprechenden Träger abgeleitet wird.

4. Aufhängungsvorrichtung nach Anspruch 1, 2 oder 3, bei der die Karosseriezustands-Geschwindigkeits-Variablen die Hub- ($\dot{H}$), Drehungs- ($\dot{R}$) und Längsneigungs-Geschwindigkeiten ($\dot{P}$) der Karosserie (10) sind.

5. Aufhängungsvorrichtung nach einem der vorhergehenden Ansprüche, bei der die Karosseriezustands-Geschwindigkeits-Variablen mit den Eck- und Kanten-Geschwindigkeiten der Karosserie (10) in Beziehung stehen.

**6.** Aufhängungsvorrichtung nach Anspruch 5, bei der die Karosserie (10) im wesentlichen rechteckig ist, die Aufhängungspunkte benachbart deren vier Ecken angeordnet sind und die Karosseriezustandsvariablen mit den Geschwindigkeiten der vier Ecken der Karosserie in Beziehung stehen.

**7.** Aufhängungsvorrichtung nach einem der vorhergehenden Ansprüche, bei der die Betätiger Dämpfer (20) mit einer variablen Dämpfungskraft sind, die mit einer Frequenz variiert werden kann, die zumindest der zweifachen Resonanzträgervibrationsfrequenz entspricht.

**8.** Aufhängungsvorrichtung nach Anspruch 7, bei der die Dämpfer (20) Mittel umfassen, um einen ersten Dämpfungsmodus mit einer hohen Dämpfungskraft und einen zweiten Dämpfungsmodus mit einer geringen Dämpfungskraft zu schaffen, und bei der ein Ventil (46) geeignet ist, die Dämpfer (20) mit einer Frequenz, die zumindest der zweifachen Resonanzträgervibrationsfrequenz entspricht, zwischen den ersten und zweiten Dämpfungsmoden zu schalten.

**9.** Aufhängungsvorrichtung nach einem der vorhergehenden Ansprüche, bei der die Träger im wesentlichen ungefederte Räder sind.

## Revendications

**1.** Dispositif de suspension destiné à être utilisé dans un véhicule possédant une caisse (10) supportée en chacun de plusieurs points de suspension par un support (11), le dispositif comprenant des moyens capteurs (13, 16, 64) destinés à dériver une vitesse pratiquement verticale ($\dot{x}_i$) du support pour chaque support et une vitesse pratiquement verticale ($\dot{y}_i$) d'angle de la caisse pour chaque point de suspension ; des moyens (64) destinés à dériver à partir des vitesses verticales supports et des angles de la caisse un jeu d'au moins trois variables d'états ($\dot{P}$, $\dot{R}$, $\dot{H}$) de la vitesse de la caisse relatives à des mouvements verticaux et à l'attitude de la caisse ; plusieurs actionneurs (12) dont chacun est disposé pour exercer une force pratiquement verticale entre la caisse (10) et un support (11) particulier à chaque point de suspension ; des moyens (64) destinés à dériver une force de suspension désirée ($F_i$) pour chaque actionneur (12) sous la forme d'une combinaison linéaire de la vitesse verticale ($\dot{x}_i$) de support du support considéré et des variables d'état ($\dot{P}$, $\dot{R}$, $\dot{H}$) de vitesses de la caisse ; et des moyens (64, 66) destinés à appliquer, pour chaque actionneur à l'actionneur correspondant, un signal de force de sortie représentatif de la force désirée ($F_i$).

**2.** Dispositif de suspension selon la revendication 1, dans lequel les actionneurs sont une fréquence de réponse au moins double de la fréquence de résonance d'oscillation des supports.

**3.** Dispositif de suspension selon la revendication 1 ou 2, dans lequel les actionneurs (12) sont adaptés pour appliquer une énergie active à la caisse (10) et aux supports (11) ; et la force de suspension désirée ($F_i$) pour chaque actionneur est dérivée par rapport à la position relative caisse/ support existant au support concerné.

**4.** Dispositif de suspension selon la revendication 1, 2 ou 3, dans lequel les variables d'état de vitesses de la caisse sont les vitesses de pilonnement ($\dot{H}$), de roulis ($\dot{R}$) et de tangage ($\dot{P}$) de la caisse (10).

**5.** Dispositif de suspension selon une quelconque des revendications précédentes, dans lequel les variables d'état de vitesses de la caisse se rapportent à des vitesses des angles ou des bords de la caisse (10).

**6.** Dispositif de suspension selon la revendication 5, dans lequel la caisse (10) est pratiquement rectangulaire, les points de suspension étant placés au voisinage des quatre angles de cette caisse et les variables d'état de la caisse se rapportant à des vitesses des quatre angles de la caisse.

**7.** Dispositif de suspension selon une quelconque des revendications précédentes, dans lequel les actionneurs sont des amortisseurs (20) ayant une force d'amortissement variable qui peut être modifiée à une fréquence au moins double de la fréquence de résonance d'oscillation des supports.

**8.** Dispositif de suspension selon la revendication 7, dans lequel les amortisseurs (20) comprennent des moyens servant à établir un premier mode d'amortissement ayant une grande force d'amortissement et un second mode d'amortissement ayant une faible force d'amortissement, et une soupape (46) adaptée pour commuter les amortisseurs (20) entre les premier et second modes d'amortissement à une fréquence au moins double de la fréquence de résonance d'oscillation des supports.

**9.** Dispositif de suspension selon une quelconque des revendications précédentes, dans lequel les supports sont des roues pratiquement non suspendues.

FIG. 1

Damping Force-Velocity Diagram

FIG. 3

FIG. 2

ANALOG
INPUTS

```
                                                            62          63
┌──────────┐      ┌───────────┐     ┌────────┐      ┌──────┐
│ INPUT AND│      │           │     │ SAMPLE │      │      │
│ANTI-ALIAS│─────▶│MULTIPLEXER│────▶│  HOLD  │─────▶│ A/D  │◀──┐
│ING FILTERS│     │           │     │        │      │      │   │
└──────────┘      └───────────┘     └────────┘      └──────┘   │
    60                 61                                       │
```

┌────────────┐          ┌──────────┐
│   MICRO    │◀════════▶│   DUAL   │          65
│ PROCESSOR  │          │   PORT   │
│            │          │   RAM    │
└────────────┘          └──────────┘
    64                       ║
                             ▼
┌────────────┐  ┌──────────┐  ┌──────────────┐
│  DIGITAL   │◀─│  OUTPUT  │  │   DIGITAL    │  67
│  OUTPUTS   │◀─│ BUFFERS  │  │    SIGNAL    │
│            │◀─│          │  │  PROCESSOR   │
└────────────┘  └──────────┘  └──────────────┘
                   66

FIG. 4

```
              ╭───────────────────╮
              │   GAINSWITCH₁     │
              ╰───────────────────╯
                       │
                       ▼
              ┌───────────────────┐
              │ USE ISOLATION GAINS│────── 100
              └───────────────────┘
        101            │
                       ▼
                  ╱──────────╲
              Y  ╱   WHEEL    ╲  N
         ┌───────   TIMER      ───────┐
         │     ╲  RUNNING     ╱       │
         │      ╲    ?      ╱         │
         ▼       ╲────────╱           ▼
    ╱─────────╲      105          ╱─────────╲
   ╱   ANY     ╲                 ╱   ANY     ╲   102
  ╱   WHEEL     ╲  Y         Y  ╱   WHEEL     ╲
 ╱  VELOCITY     ──────┬────────  VELOCITY     ╲
  ╲    >IWS     ╱      │       ╲    >OWS     ╱
   ╲    ?      ╱       ▼        ╲    ?      ╱
    ╲────────╱   ┌──────────┐    ╲────────╱
       │   N     │  RESET   │       N  │
       │         │  WHEEL   │─── 103   │
       │         │  TIMER   │          │
       │         └──────────┘          │
       │              │                │
       └──────────────┤                │
                      ▼                │
                 ┌──────────┐          │
          104    │   USE    │          │
                 │  WHEEL   │          │
                 │  GAINS   │          │
                 └──────────┘          │
                      │◀───────────────┘
                      ▼
                 ╭────────╮
                 │  EXIT  │
                 ╰────────╯
```

FIG. 6

13

FIG.5

EP 0 426 339 B1

FIG.7

READ INPUTS — 70

COMPUTE STATE
VARIABLES
$\dot{X}_i, \dot{H}, \dot{R}, \dot{P},$

71

SELECT GAINS

72

COMPUTE DESIRED
FORCES $F_i$

73

DETERMINE ACTUATOR
DAMPER COMMANDS

74

DELIVER OUTPUT
COMMANDS

75

FIG.8

CONTINUOUS
SEMI-ACTIVE

DERIVE SIGN OF
DEMAND POWER — 80

81
POWER
DISSIPATIVE
?

Y              N

CHOOSE
DESIRED FORCE

82

CHOOSE
MINIMUM DAMPING

83

FIG.9

FIG.10